# EUROPEAN PATENT APPLICATION

(11) **EP 4 447 365 A1**
(43) Date of publication of application: **16.10.2024**
(21) Application number: 23737104.2
(22) Date of filing: 05.01.2023
(51) Int. Cl.: H04L 5/00

(54) **COMMUNICATION METHOD AND COMMUNICATION APPARATUS**

(30) Priority: 06.01.2022 CN 202210011227
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN); ZHANG, Li, Shenzhen, Guangdong 518129 (CN)
(74) Representative: Pfenning, Meinig & Partner mbB
(86) International application number: PCT/CN2023/070715
(87) International publication number: WO 2023/131242

(57) **Abstract**

Embodiments of this application provide a communication method and a communication apparatus. In this application, a terminal device receives a preconfigured measurement gap MG indicated by a network device and MG status information corresponding to each CC in at least one CC after the CC is deactivated. The MG status information is activated or deactivated. In a case that M CCs in the at least one CC are deactivated, the terminal device activates or deactivates the MG based on M pieces of MG status information corresponding to the M deactivated CCs, so that the terminal device can accurately determine, based on the MG status information of the deactivated CC, whether to activate or deactivate a preconfigured MG. This avoids a problem that a cell handover error is caused because an MO corresponding to the deactivated CC cannot be measured.

## Description

This application claims priority to Chinese Patent Application No. 202210011227.0, filed with the China National Intellectual Property Administration on January 6, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

In a carrier aggregation (carrier aggregation, CA) scenario, a terminal device may use a plurality of component carriers (component carriers, CCs) simultaneously. In the CA scenario, when a receiver bandwidth of the terminal device is insufficient to cover a frequency on which a serving cell is located and a frequency on which a to-be-measured neighboring cell is located, the terminal device measures the to-be-measured neighboring cell based on a measurement gap (measurement gap, MG). In a technology, a base station preconfigures the MG for the terminal device, and configures one or more bandwidth parts (bandwidth parts, BWPs) for all CCs in a CA combination of the terminal device. In addition, the base station further indicates whether to activate the preconfigured MG when any BWP corresponding to each of all the CCs in the CA combination is an active BWP. When all the CCs in the CA combination of the terminal device are activated CCs, whether the preconfigured MG is finally activated may be determined based on the following condition: When the preconfigured MG is indicated to be deactivated for an active BWP of each CC in the CA combination of the terminal device, the terminal device deactivates the preconfigured MG; or when the preconfigured MG is indicated to be activated for an active BWP of any CC in all the CCs of the terminal device, the terminal device activates the preconfigured MG.

When an activated CC and a deactivated CC exist in the CA combination of the terminal device, because the deactivated CC does not have a corresponding active BWP, although the deactivated CC also covers a measurement object (measurement object, MO), the terminal device still determines, based on MG status information corresponding to an active BWP of a CC other than the deactivated CC in the CA combination, whether to activate the preconfigured MG. As a result, the MO corresponding to the deactivated CC cannot be measured, and a cell handover error is caused.

### SUMMARY

Embodiments of this application provide a communication method and a communication apparatus, to avoid a cell handover error.

According to a first aspect, a communication method is provided. The method may be performed by a terminal device, or may be performed by a component (for example, a chip or a circuit) of the terminal device. This is not limited herein. For ease of description, the following uses an example in which the method is performed by a terminal device for description.

The method may include: The terminal device receives first information from a network device. The first information includes a preconfigured measurement gap MG for the terminal device. The terminal device receives second information from the network device. The second information indicates MG status information corresponding to each CC in at least one CC after the CC is deactivated, and the MG status information is activated or deactivated. In a case that M CCs in the at least one CC are deactivated, the terminal device activates or deactivates the MG based on M pieces of MG status information corresponding to the M deactivated CCs. M is a positive integer.

In the foregoing technical solution, the MG status information corresponding to the deactivated CC is considered, so that the terminal device can accurately determine, based on the MG status information of the deactivated CC, whether to activate or deactivate the preconfigured MG, thereby avoiding a cell handover error. For example, in a two-carrier aggregation scenario, the terminal device may use both a CC 1 and a CC 2, and four BWPs are configured in each of the CC 1 and the CC 2. When a BWP 1 to a BWP 4 of the CC 1 are active BWPs, corresponding MG #1 status information is: deactivated, activated, activated, and activated. When a BWP 1 to a BWP 4 of the CC 2 are active BWPs, corresponding MG #1 status information is: activated, deactivated, activated, and activated. When the CC 2 is a deactivated CC, the CC 1 is an activated CC, and an active BWP in the CC 1 is CC 1-BWP 1, because there is no active BWP in the CC 2, and there is an active BWP only in the CC 1, if an existing determining condition is used, the terminal device finally determines, based only on that the MG #1 status information corresponding to CC 1-BWP 1 when CC 1-BWP 1 is the active BWP, to deactivate a preconfigured MG #1. It can be learned that, after the CC 2 is deactivated, an existing determining method does not consider whether a measurement object that needs to be measured in the MG exists on the CC 2 when determining whether to activate the preconfigured MG. This may cause inaccuracy of a result of determining whether to activate the MG. For example, there is still a measurement object that needs an MG on the deactivated CC 2. Because the terminal device has deactivated the preconfigured MG #1, the measurement object that needs the MG on the CC 2 cannot be measured. However, in the technical solution of this application, the network device directly indicates, to the terminal device, the MG status information corresponding to the deactivated CC, so that the terminal device can accurately determine, in a scenario in which the CC is deactivated, based on the received MG status information of the deactivated CC, to activate or deactivate the preconfigured MG.

In a possible design, that the terminal device activates or deactivates the MG based on M pieces of MG status information corresponding to the M deactivated CCs includes: The terminal device activates or deactivates the MG based on the M pieces of MG status information corresponding to the M deactivated CCs and N pieces of MG status information corresponding to active bandwidth parts BWPs in N CCs. N is a positive integer, and the M CCs and the N CCs are all CCs in a carrier aggregation CA combination of the terminal device.

It may be understood that the N CCs are activated CCs.

In the foregoing technical solution, the terminal device may accurately determine, based on the received MG status information of the deactivated CC and with reference to the MG status information of the active BWP in the activated CC, whether to activate or deactivate the preconfigured MG. This avoids a cell handover error caused because an MO corresponding to the deactivated CC cannot be measured. With reference to the example in the first aspect, descriptions are further provided. When the CC 2 is a deactivated CC, the CC 1 is an activated CC, and an active BWP in the CC 1 is CC 1-BWP 1, if MG #1 status information of CC 1-BWP 1 is deactivated, and MG #1 status information of the CC 2 is activated, the terminal device finally activates the preconfigured MG #1.

In a possible design, the method further includes: The terminal device receives third information from the network device. The third information indicates MG status information respectively corresponding to each BWP in all the CCs when the BWP is an active BWP. The terminal device determines, based on the third information, the N pieces of MG status information corresponding to the active BWPs in the N CCs.

In a possible design, that the terminal device activates or deactivates the MG based on the M pieces of MG status information corresponding to the M deactivated CCs and N pieces of MG status information corresponding to active bandwidth parts BWPs in N CCs includes: In a case that the M pieces of MG status information corresponding to the M deactivated CCs are all deactivated, and the N pieces of MG status information corresponding to the active BWPs in the N CCs are all deactivated, the terminal device deactivates the MG; otherwise, the terminal device activates the MG.

In a possible design, when a first CC covers only a first MO, the second information indicates that MG status information corresponding to the first CC after the first CC is deactivated is deactivated, the first MO is a serving cell MO corresponding to the first CC, and the first CC is any CC in the at least one CC; or when a first cell corresponding to a first CC does not cover any MO, the second information indicates that MG status information corresponding to the first CC after the first CC is deactivated is deactivated.

In the foregoing technical solution, a determining condition for determining whether MG status information of a deactivated CC is activated or deactivated is provided. It should be understood that, for a serving cell MO corresponding to the deactivated CC, the terminal device may measure the serving cell MO without a preconfigured MG. Therefore, if the deactivated CC covers only one MO, and the MO is a serving cell MO of a cell corresponding to the CC, the MG status information of the deactivated CC may be deactivated. In this way, it can be ensured that one deactivated CC does not cause unnecessary MG activation due to existence of the serving cell MO.

According to a second aspect, a communication method is provided. The method may be performed by a network device, or may be performed by a component (for example, a chip or a circuit) of the network device. This is not limited herein. For ease of description, the following uses an example in which the method is performed by a network device for description.

The method may include: The network device sends first information to a terminal device. The first information includes a preconfigured measurement gap MG for the terminal device. The network device determines second information. The second information indicates MG status information corresponding to each CC in at least one CC after the CC is deactivated, and the MG status information is activated or deactivated. The network device sends the second information to the terminal device.

It should be understood that the at least one CC herein may be understood as at least one CC in all CCs in one CA combination of the terminal device.

In the foregoing technical solution, the network device configures the MG status information of the deactivated CC for the terminal device, so that the terminal device can accurately determine, based on the MG status information of the deactivated CC, whether to activate or deactivate the preconfigured MG. This avoids a problem that a cell handover error is caused because an MO corresponding to the deactivated CC cannot be measured.

In a possible design, the method further includes: The network device sends third information to the terminal device, where the third information indicates MG status information respectively corresponding to each bandwidth part BWP in all the CCs when each BWP is an active BWP.

In a possible design, that the network device determines second information, where the second information indicates MG status information corresponding to each CC in at least one CC after the CC is deactivated, and the MG status information is activated or deactivated includes: When a first CC covers only a first MO, the network device determines the second information, where the second information indicates that MG status information corresponding to the first CC after the first CC is deactivated is deactivated, the first MO is a serving cell MO corresponding to the first CC, and the first CC is any CC in the at least one CC; or when a first CC does not cover any MO, the network device determines the second information, where the second information indicates that MG status information corresponding to the first CC after the first CC is deactivated is deactivated.

For an effect corresponding to the second aspect, refer to the effect descriptions of the first aspect. Details are not described herein again.

According to a third aspect, a communication method is provided. The method may be performed by a terminal device, or may be performed by a component (for example, a chip or a circuit) of the terminal device. This is not limited herein. For ease of description, the following uses an example in which the method is performed by a terminal device for description.

The method may include: The terminal device receives second information from a network device. The second information indicates S measurement objects MOs corresponding to each CC in P CCs in L component carriers CCs. S is 0 or S is a positive integer, the S MOs are a part or all of one or more MOs that need to be measured by the terminal device, the L CCs are all CCs in a carrier aggregation CA combination of the terminal device, and L is an integer greater than 1. Alternatively, the second information indicates Q MOs corresponding to each BWP in P CCs in L CCs. Q is 0 or Q is a positive integer, and the Q MOs are a part or all of one or more MOs. In a case that M CCs in the L CCs are deactivated, the terminal device activates or deactivates a measurement gap MG based on the second information. M is a positive integer less than L.

In the foregoing technical solution, when a CC is deactivated, the terminal device determines, based on a correspondence that is between a CC and an MO or a correspondence between a BWP and an MO in a CC and that is configured by the network device, whether one or more MOs that need to be measured by the terminal device can be measured. If the one or more MOs that need to be measured by the terminal device can be measured without an MG, the terminal device deactivates a preconfigured MG; otherwise, the terminal device activates a preconfigured MG, to avoid incorrect activation or deactivation of the MG.

In a possible design, the method further includes: The terminal device receives first configuration information from the network device, where the first configuration information is for configuring the one or more MOs for the terminal device; and the terminal device receives first information from the network device, and the first information includes the measurement gap MG configured for the terminal device.

In a possible design, that the terminal device activates or deactivates an MG based on the second information includes: The terminal device determines a first MO group based on the second information, where the first MO group includes all MOs that correspond to BWPs whose corresponding MG status information is deactivated in active BWPs in N CCs, the N CCs are a part or all of activated CCs in the P CCs, and N is a positive integer. The terminal device determines a second MO group, where the second MO group includes an MO other than a first MO corresponding to each CC in the M CCs in the one or more MOs, where a first MO corresponding to a first CC is a serving cell MO corresponding to the first CC, and the first CC is any CC in the M CCs. The terminal device deactivates the MG in a case that the MOs included in the first MO group and the MOs included in the second MO group are the same.

In the foregoing technical solution, a specific implementation procedure of determining whether to activate the MG is provided. The first MO group is a set of remaining MOs in all MOs that need to be measured by the terminal device other than a serving cell MO corresponding to a deactivated CC, and the second MO group is a set of MOs that are in the activated CC and that are covered by the active BWP whose MG status information is deactivated. When the MOs included in the first MO group and the MOs included in the second MO group are the same, the terminal device deactivates a preconfigured MG; otherwise, the terminal device activates a preconfigured MG.

Herein, an example in which the one or more MOs that need to be measured by the terminal device are C MOs is used for description. Whether the MOs included in the first MO group and the MOs included in the second MO group are the same may be understood as: When determining to deactivate an MG, the terminal device needs to determine whether all remaining MOs in the CMOs other than the first MO that may correspond to the M deactivated CCs can be covered by an active BWP whose MG status information is deactivated in the N activated CCs. If all the remaining MOs can be covered, it indicates that no MO needs to be measured with the preconfigured MG. In this way, the terminal device can deactivate the MG; otherwise, the terminal device needs to activate the MG.

In a possible design, the method further includes: The terminal device receives third information from the network device, where the third information indicates MG status information corresponding to each bandwidth part BWP in the L CCs when the bandwidth part BWP is an active BWP, and the MG status information is activated or deactivated. The terminal device determines, based on the third information, a BWP whose corresponding MG status information is deactivated in N active BWPs in the N CCs.

According to a fourth aspect, a communication method is provided. The method may be performed by a network device, or may be performed by a component (for example, a chip or a circuit) of the network device. This is not limited herein. For ease of description, the following uses an example in which the method is performed by a network device for description.

The method may include: The network device determines second information. The second information indicates S measurement objects MOs corresponding to each CC in P CCs in L component carriers CCs. S is 0 or S is a positive integer, the S MOs are a part or all of one or more MOs that need to be measured by a terminal device, the L CCs are all CCs in a carrier aggregation CA combination of the terminal device, and L is an integer greater than 1. Alternatively, the second information indicates Q MOs corresponding to each BWP in P CCs in L CCs. Q is 0 or Q is a positive integer, and the Q MOs are a part or all of one or more MOs. The network device sends the second information to the terminal device.

For beneficial effects of the fourth aspect, refer to descriptions in the third aspect. Details are not described herein again.

In a possible design, the method further includes: The network device sends first information to the terminal device, where the first information includes a measurement gap MG configured for the terminal device; and the network device sends first configuration information to the terminal device, where the first configuration information is for configuring the one or more MOs for the terminal device.

In a possible design, the method further includes: The network device sends third information to the terminal device. The third information indicates MG status information corresponding to each bandwidth part BWP in the L CCs when the BWP is an active BWP, and the MG status information is activated or deactivated.

According to a fifth aspect, a communication apparatus is provided. The apparatus is configured to perform the method provided in the first aspect or the third aspect. Specifically, the apparatus may include a unit and/or a module configured to perform the method in any one of the first aspect or the third aspect, and the possible implementations of the first aspect or the third aspect. For example, the apparatus may include a processing unit and/or a communication unit.

In an implementation, the apparatus is a terminal device. When the apparatus is the terminal device, the communication unit may be a transceiver or an input/output interface, and the processing unit may be at least one processor. For example, the transceiver may be a transceiver circuit. For example, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a sixth aspect, a communication apparatus is provided. The apparatus is configured to perform the method provided in the second aspect or the fourth aspect. Specifically, the apparatus may include a unit and/or a module configured to perform the method in any one of the second aspect or the fourth aspect, and the possible implementations of the second aspect or the fourth aspect. For example, the apparatus may include a processing unit and/or a communication unit.

In an implementation, the apparatus is a network device. When the apparatus is the network device, the communication unit may be a transceiver or an input/output interface, and the processing unit may be at least one processor. For example, the transceiver may be a transceiver circuit. For example, the input/output interface may be an input/output circuit.

In another implementation, the apparatus is a chip, a chip system, or a circuit used in a network device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit. The processing unit may be at least one processor, a processing circuit, a logic circuit, or the like.

According to a seventh aspect, a communication apparatus is provided. The apparatus includes at least one processor. The at least one processor is coupled to at least one memory, the at least one memory is configured to store a computer program or instructions, and the at least one processor is configured to invoke and run the computer program or the instructions from the at least one memory, to enable the communication apparatus to perform the method in any one of the first aspect or the third aspect, and the possible implementations of the first aspect or the third aspect.

In an implementation, the apparatus is a terminal device.

In another implementation, the apparatus is a chip, a chip system, or a circuit used in a terminal device.

According to an eighth aspect, a communication apparatus is provided. The apparatus includes at least one processor. The at least one processor is coupled to at least one memory, the at least one memory is configured to store a computer program or instructions, and the at least one processor is configured to invoke and run the computer program or the instructions from the at least one memory, to enable the communication apparatus to perform the method in any one of the second aspect or the fourth aspect and the possible implementations of the second aspect or the fourth aspect.

In an implementation, the apparatus is a network device.

In another implementation, the apparatus is a chip, a chip system, or a circuit used in a network device.

According to a ninth aspect, this application provides a processor, configured to perform the methods provided in the foregoing aspects.

Unless otherwise stated, or if operations such as sending and obtaining/receiving related to the processor do not conflict with actual functions or internal logic thereof in related descriptions, the operations may be understood as operations such as outputting, receiving, and inputting of the processor, or may be understood as sending and receiving operations performed by a radio frequency circuit and an antenna. This is not limited in this application.

According to a tenth aspect, a computer-readable storage medium is provided. The computer-readable storage medium stores program code executed by a device. The program code includes the method in any one of the first aspect, the second aspect, the third aspect, or the fourth aspect, and the possible implementations of the first aspect, the second aspect, the third aspect, or the fourth aspect.

According to an eleventh aspect, a computer program product including instructions is provided. When the computer program product runs on a computer, the computer is enabled to perform the method in any one of the first aspect, the second aspect, the third aspect, or the fourth aspect, and the possible implementations of the first aspect, the second aspect, the third aspect, or the fourth aspect.

According to a twelfth aspect, a chip is provided. The chip includes a processor and a communication interface, and the processor reads, through a communication interface, instructions stored in a memory, to perform the method in any one of the first aspect, the second aspect, the third aspect, or the fourth aspect, and the possible implementations of the first aspect, the second aspect, or the third aspect, or the fourth aspect.

For example, in an implementation, the chip further includes the memory. The memory stores a computer program or instructions. The processor is configured to execute the computer program or the instructions stored in the memory. When the computer program or the instructions are executed, the processor is configured to perform the method in any one of the first aspect, the second aspect, the third aspect, or the fourth aspect, and the possible implementations of the first aspect, the second aspect, the third aspect, or the fourth aspect.

According to a thirteenth aspect, a communication system is provided. The communication system includes the communication apparatuses shown in the seventh aspect and the eighth aspect.

### BRIEF DESCRIPTION OF DRAWINGS

FIG. 1 is a schematic diagram of a communication system according to an embodiment of this application;
FIG. 2 is a schematic diagram of a correspondence between an MO 1 to an MO 5 and a CC 1 and a CC 2 configured in a two-carrier aggregation scenario;
FIG. 3 is a schematic flowchart of a communication method according to this application;
FIG. 4 is a schematic flowchart of another communication method according to this application;
FIG. 5 is a schematic diagram of a correspondence between an MO 1 to an MO 4 and a CC 1 and a CC 2 configured in a two-carrier aggregation scenario;
FIG. 6 is a schematic block diagram of a communication apparatus 1000 according to this application; and
FIG. 7 is a schematic diagram of a structure of a communication apparatus 10 according to this application.

### DESCRIPTION OF EMBODIMENTS

The following describes technical solutions of embodiments in this application with reference to the accompanying drawings.

The technical solutions in embodiments of this application may be applied to various communication systems, for example, wireless communication related to 5th generation (5th generation, 5G), new radio (new radio, NR), long term evolution (long term evolution, LTE), internet of things (internet of things, IoT), wireless fidelity (wireless fidelity, Wi-Fi), and the 3rd generation partnership project (3rd generation partnership project, 3GPP), or other wireless communication that may appear in the future.

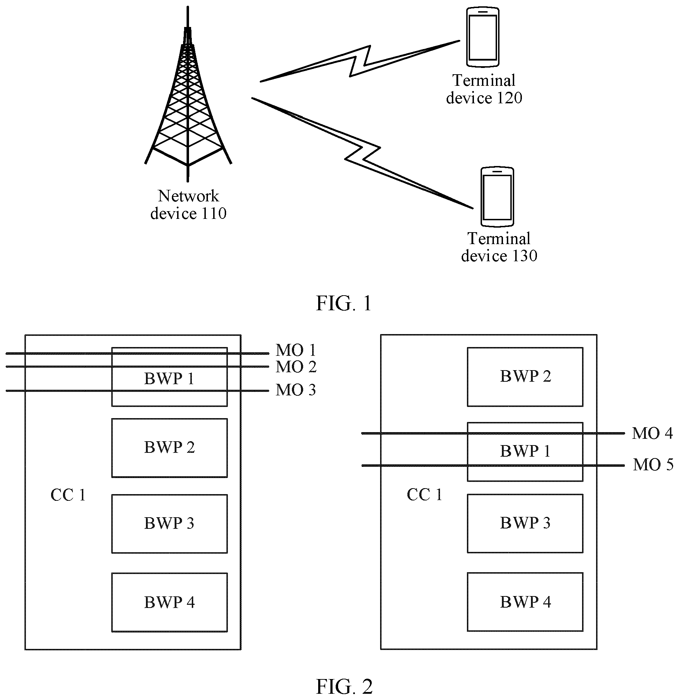

FIG. 1 is a schematic diagram of a communication system according to an embodiment of this application. The communication system includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 through a radio link, and exchange information. It may be understood that the network device and the terminal device may also be referred to as communication devices.

The network device is a network side device that has a wireless transceiver function. The network device may be an apparatus that provides a wireless communication function for the terminal device in a radio access network (radio access network, RAN) and that is referred to as a RAN device. For example, the network device may be a base station (base station), an evolved NodeB (evolved NodeB, eNodeB), a next-generation NodeB (next generation NodeB, gNB) in a 5G mobile communication system, a base station that is subsequently evolved in the 3GPP, a transmission reception point (transmission reception point, TRP), an access node, a wireless relay node, or a wireless backhaul node in a Wi-Fi system, or the like. In communication systems that use different radio access technologies (radio access technologies, RATs), names of devices having a base station function may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, a function of the CU may be implemented by one entity or different entities. For example, the function of the CU is further divided, to be specific, a control plane and a user plane are separated and implemented by using different entities, which are respectively a control plane CU entity (namely, a CU-CP entity) and a user plane CU entity (namely, a CU-UP entity). The CU-CP entity and the CU-UP entity may be coupled to the DU to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, a part of functions of the radio access network device may be implemented by using a plurality of network function entities. These network function entities may be network elements in a hardware device, or may run software functions on dedicated hardware, or may be virtualized functions instantiated on a platform (for example, a cloud platform). The network device may further include an active antenna unit (active antenna unit, AAU for short). The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle to everything (vehicle to everything, V2X) technology, an access network device may be a road side unit (road side unit, RSU). A plurality of access network devices in a communication system may be base stations of a same type, or may be base stations of different types. The base station may communicate with the terminal device, or may communicate with the terminal device through a relay station. In embodiments of this application, an apparatus configured to implement a function of the network device may be the network device, or may be an apparatus that can support the network device in implementing the function, for example, a chip system or a combined device or a part that can implement the function of the access network device. The apparatus may be installed in the network device. In embodiments of this application, the chip system may include a chip, or may include a chip and another discrete device. In embodiments of this application, the network device is used as an example to describe the technical solutions.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing devices. The terminal device is configured to connect a person, a thing, a machine, and the like, and may be widely used in various scenarios, such as cellular communication, device-to-device (device-to-device, D2D) communication, V2X communication, machine-to-machine/machine-type communication (machine-to-machine/machine-type communication, M2M/MTC) communication, internet of things, virtual reality (virtual reality, VR), augmented reality (augmented reality, AR), industrial control (industrial control), self driving (self driving), telemedicine (remote medical), smart grid (smart grid), smart furniture, smart office, smart wearable, smart transportation, smart city (smart city), uncrewed aerial vehicle, robot, and the like. For example, the terminal device may be a handheld terminal in cellular communication, a communication device in D2D, an IoT device in MTC, a surveillance camera in smart transportation and a smart city, or a communication device in an uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be a terminal device, or may be an apparatus that can support the terminal device in implementing the function, for example, a chip system, or a combined device or a part that can implement the function of the terminal device. The apparatus may be installed in the terminal device. For ease of description, the terminal device is used as an example for description in this application.

To better understand embodiments of this application, the following first describes concepts in embodiments of this application.
1. Measurement object (measurement object, MO): The measurement object is an object measured by UE, and mainly includes one or more of the following: a synchronization signal and PBCH block (synchronization signal and PBCH block, SSB) frequency, an SSB-based subcarrier spacing, an SSB-based measurement timing configuration (SSB-based measurement timing configuration, SMTC) configuration, a cell in a whitelist which is alternatively referred to as an allow list, and a cell in a blacklist which is alternatively referred to as a blocklist.
2. Measurement gap (measurement gap, MG): Usually, a terminal device has only one receiver, and can receive a signal only on one frequency at a same moment, and cannot perform data receiving and sending and mobility measurement simultaneously. Therefore, the MG is a time interval that is dedicated to measurement and that is set by a network device and the terminal device. The terminal device leaves a current frequency to perform measurement on another frequency. In this time period, because the network device has been set not to require the terminal device to perform receiving and sending, the terminal device may focus on measurement, and does not need to perform data receiving and sending. In essence, the MG is a mechanism of performing data receiving and sending and mobility measurement at different time. The MG is used for inter-frequency measurement and inter-system measurement.
3. Preconfigured MG activation/deactivation: One carrier includes a plurality of BWPs. When a terminal device performs BWP switching on a single carrier, if a preconfigured MG is indicated to be deactivated for a BWP (active BWP) to which the terminal device switches, the terminal device deactivates the preconfigured MG, in other words, does not start the preconfigured MG at configured time; if a preconfigured MG is indicated to be activated for a BWP (active BWP) to which the terminal device switches, the terminal device activates the preconfigured MG, in other words, the preconfigured MG is started at the configured time and the measurement is performed.
4. CA: A CA technology can aggregate a plurality of CCs to implement large-bandwidth transmission and effectively improve uplink and downlink transmission rates. A terminal determines, based on a capability of the terminal, the maximum quantity of component carriers that can be used for uplink and downlink transmission at the same time. For example, in a three-carrier aggregation scenario, the terminal device may simultaneously use three carriers. Among the three carriers, one carrier is referred to as a primary component carrier (primary component carrier, PCC), a cell corresponding to the PCC is referred to as a PCell, the other two carriers are referred to as secondary component carriers (secondary component carriers, SCCs), and cells corresponding to the SCCs are referred to as SCells. A CA combination of the terminal device may be understood as a set of CCs corresponding to a PCell and a SCell that are configured by the network device for the terminal device. For example, in the three-carrier aggregation scenario, the CA combination of the terminal device includes three carriers. When an SCell is activated, UE and the SCell need to exchange control messages. This consumes not only power of the UE, but also a radio resource of the SCell. When a data traffic volume of the UE is not large, the PCell can handle the data traffic, and the additional consumption is unnecessary. In this case, the SCell can be deactivated.

It should be noted that deactivating the SCell may also be understood as deactivating a CC corresponding to the SCell. The two types of descriptions are interchangeable. This is not limited in this application.

For example, the network device preconfigures one MG, for example, an MG #1, for the terminal device. The network device configures an MO 1 to an MO 6, and the MO 6 does not need to be measured in the MG. Because the network device configures only one MG for the terminal device, it may be understood that the MG #1 is for measuring the MO 1 to an MO 5, or it may be described as that the MG #1 is configured for the MO 1 to the MO 5.

For example, the network device preconfigures a plurality of MGs for the terminal device, for example, an MG #1 and an MG #2. The network device configures an MO 1 to an MO 6, and the MO 1 to the MO 6 all need to be measured in the MG. In this case, the network device directly indicates that the MG #1 is for measuring the MO 1 to an MO 3, and the MG #2 is for measuring an MO 4 to the MO 6.

For example, the network device configures one MG, for example, an MG #1, for the terminal device. The MG #1 may be further used for synchronization signal and PBCH block (synchronization signal and PBCH block, SSB) measurement, channel state information reference signal (channel state information reference signal, CSI-RS) positioning measurement, non-terrestrial network (non-terrestrial network, NTN) measurement, and the like.

With reference to FIG. 2, the following describes how to determine whether to activate the MG based on the condition provided in the background.

For ease of understanding, it should be noted herein that a plurality of BWPs may be configured in one CC. When the CC is an activated CC, only one of the plurality of configured BWPs can be activated. In addition, when the CC is a deactivated CC, no BWP configured on the deactivated CC exists, in other words, there is no active BWP on the deactivated CC.

As shown in FIG. 2, in a two-carrier aggregation scenario, the terminal device may use both a CC 1 and a CC 2. Four BWPs are configured for both the CC 1 and the CC 2, and a preconfigured MG #1 is configured for an MO 1 to an MO 5. The MO 1, an MO 2, and an MO 3 are covered by CC 1-BWP 1, and an MO 4 and the MO 5 are covered by CC 2-BWP 2. In this case, a specific case of MG #1 status information corresponding to each BWP in the CC 1 and the CC 2 when the BWP is an active BWP is shown in Table 1.

**Table 1**

| Active BWP in the CC 1 | MG #1 status information | Active BWP in the CC 2 | MG #1 status information |
|---|---|---|---|
| BWP 1 | Deactivated | BWP 1 | Activated |
| BWP 2 | Activated | BWP 2 | Deactivated |
| BWP 3 | Activated | BWP 3 | Activated |
| BWP 4 | Activated | BWP 4 | Activated |

When all CCs in a CA combination of the terminal device are activated CCs (in other words, both the CC 1 and the CC 2 are activated CCs), an active BWP in the CC 1 is CC 1-BWP 1, and an active BWP in the CC 2 is CC 2-BWP 2, because corresponding MG #1 status information is deactivated when CC 1-BWP 1 and CC 2-BWP 2 are active BWPs, the terminal device may deactivate a preconfigured MG #1. For another example, when both the CC 1 and the CC 2 are the activated CCs, the active BWP in the CC 1 is CC 1-BWP 2, and the active BWP in the CC 2 is CC 2-BWP 2, because corresponding MG #1 status information is activated when CC 1-BWP 2 is an active BWP, and corresponding MG #1 status information is deactivated when CC 2-BWP 2 is an active BWP, the terminal device needs to activate the preconfigured MG #1.

For the foregoing condition for determining whether to activate the preconfigured MG, there is a problem: when one or more CCs in the CA combination of the terminal device are deactivated, in other words, there is no active BWP on the deactivated CC, whether it can still be determined, based on the foregoing condition, to activate or deactivate the preconfigured MG.

FIG. 2 is still used as an example. When the CC 2 is a deactivated CC, the CC 1 is an activated CC, and an active BWP in the CC 1 is CC 1-BWP 1, there is no active BWP in the CC 2, and the active BWP is only in the CC 1. Therefore, based on the foregoing condition, the terminal device needs to determine, based only on MG #1 status information corresponding to current activated CC 1-BWP 1, whether to activate the preconfigured MG. Because the corresponding MG #1 status information of the CC 1-BWP 1 when CC 1-BWP 1 is an active BWP is deactivated, the terminal device finally deactivates the preconfigured MG #1. Because the MO 1, the MO 2, and the MO 3 are covered by CC 1-BWP 1, deactivation of the MG #1 does not affect measurement of the MO 1, the MO 2, and the MO 3, but the MO 4 and the MO 5 are covered by CC 2-BWP 2. Because CC 2-BWP 2 is not an active BWP, when the terminal device deactivates the preconfigured MG #1, the MO 4 and the MO 5 in the CC 2 cannot be measured. In other words, in a scenario in which a CC is deactivated, if whether to activate the preconfigured MG #1 is still determined based on the foregoing condition, the preconfigured MG #1 is incorrectly deactivated.

In view of this, this application provides a communication method to avoid a problem that in a scenario in which a CC is deactivated, a cell handover error is caused because an MO corresponding to the deactivated CC cannot be measured.

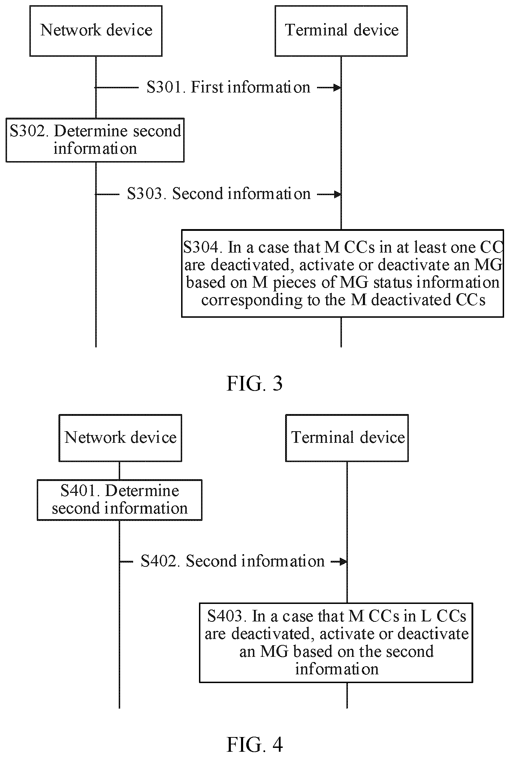

FIG. 3 is a schematic flowchart of a communication method according to this application. The method may be performed by a terminal device and a network device, or may be performed by a chip in the terminal device and a chip in the network device. The network device in FIG. 3 may be the access network device 110 in FIG. 1, and the terminal device may be the terminal device 120 in FIG. 1. The method shown in FIG. 3 may include the following operations.

S301. The network device sends first information to the terminal device, and the first information includes a preconfigured MG for the terminal device. Correspondingly, the terminal device receives the first information from the network device.

For example, the preconfigured MG may include preconfigured indication information, a gap mode, and gapOffset.

For example, the method further includes: The network device sends first configuration information to the terminal device. The first configuration information is for configuring C MOs for the terminal device, C is a positive integer, and the preconfigured MG is configured for the C MOs. Correspondingly, the terminal device receives the first configuration information.

S302. The network device determines second information. The second information indicates MG status information corresponding to each CC in at least one CC after the CC is deactivated, and the MG status information is activated or deactivated.

For example, the MG status information may be an information element (information element, IE) whose enumerated value is activated, the MG status information is an IE whose enumerated value is deactivated, or the MG status information is an IE whose enumerated value is activated or deactivated, or an activation indication IE whose enumerated value is true, or a deactivation indication IE whose enumerated value is true. A specific indication manner of the MG status information is not limited in this application.

It should be understood that the at least one CC may be understood as at least one CC in all CCs in the CA combination of the terminal device in a CA scenario.

For ease of description, descriptions are provided below by using an example in which a quantity of CCs in the CA combination of the terminal device is L. L is an integer greater than 1.

In an implementation, the second information indicates MG status information corresponding to each CC of a PCC and all SCCs of the terminal device after the CC is deactivated; in other words, the second information indicates MG status information respectively corresponding to each CC in all the CCs after the CC is deactivated.

In another implementation, the second information indicates MG status information respectively corresponding to each CC in all SCCs or a part of SCCs of the terminal device after the CC is deactivated. For example, when a first CC covers only a first MO, the second information indicates that MG status information corresponding to the first CC after the first CC is deactivated is deactivated. The first MO is one MO in C MOs, and the first MO is a serving cell MO corresponding to the first CC. The first CC is any CC of the at least one CC. Alternatively, when a first CC does not cover any MO in C MOs, the second information indicates that MG status information corresponding to the first CC after the first CC is deactivated is also deactivated; otherwise, the second information indicates that the MG status information corresponding to a first CC after the first CC is deactivated is activated.

It should be understood that, in the CA scenario, one CC in the CA combination corresponds to one serving cell, and the serving cell corresponds to only one serving cell MO. Therefore, the serving cell MO corresponding to the first CC is the serving cell MO corresponding to a serving cell corresponding to the first CC.

For example, when the first CC covers only the first MO, the second information indicates that the MG status information corresponding to the first CC after the first CC is deactivated is deactivated. A reason is that a serving cell MO corresponding to a deactivated CC can be measured without a preconfigured MG. Therefore, if the deactivated first CC covers only one MO, and the MO is the serving cell MO of the cell corresponding to the first CC, the MG status information of the first CC after the first CC is deactivated may be deactivated.

For ease of description, in this application, an MO covered by a CC may also be described as an MO covered by a cell corresponding to the CC, or an MO corresponding to the CC. This is not limited in this application.

In a specific implementation, one bit (bit) or two bits in the second information may indicate MG status information corresponding to one CC in at least one CC after the CC is deactivated. For example, when one bit is 0, it indicates that MG status information corresponding to the CC after the CC is deactivated is deactivated, or when one bit is 1, it indicates that the MG status information corresponding to the CC after the CC is deactivated is activated; or vice versa. For another example, when two bits are 00, it indicates that the CC does not cover any MO in the CMOs, in other words, it indicates that status information of preconfigured MG corresponding to the CC after the CC is deactivated is deactivated. When two bits are 01, it indicates that the CC covers only one MO in the C MOs and the MO is a serving cell MO, in other words, it indicates that the status information of preconfigured MG corresponding to the CC after the CC is deactivated is deactivated. When two bits are 10, it indicates that the CC covers only one MO in the C MOs and the MO is not a serving cell MO, in other words, it indicates that the status information of preconfigured MG corresponding to the CC after the CC is deactivated is activated. When two bits are 11, it indicates that the CC covers a plurality of MOs in the C MOs, in other words, it indicates that the status information of preconfigured MG corresponding to the CC after the CC is deactivated is activated.

In another implementation, the second information indicates an MO covered by each CC in the at least one CC. For example, when one CC does not cover any MO in the C MOs, it indicates that status information of preconfigured MG corresponding to the CC after the CC is deactivated is deactivated. When one CC covers only one MO in the C MOs, and the MO is a serving cell MO, it indicates that status information of preconfigured MG corresponding to the CC after the CC is deactivated is deactivated. When one CC covers only one MO in the C MOs, and the MO is not a serving cell MO, it indicates that status information of preconfigured MG corresponding to the CC after the CC is deactivated is activated. When one CC covers a plurality of MOs in the C MOs, it indicates that status information of preconfigured MG corresponding to the CC after the CC is deactivated is activated.

The following uses an example to specifically describe how to determine the MG status information corresponding to the deactivated CC. FIG. 2 is used as an example. For the configuration in FIG. 2, refer to the foregoing descriptions. Details are not described herein again. It is assumed that the MO 1 is a serving cell MO of a cell corresponding to the CC 1, and the MO 4 is a serving cell MO of a cell corresponding to the CC 2. It can be learned that, in addition to the MO 1, there are other MOs corresponding to the CC 1. Therefore, MG status information corresponding to a deactivated CC 1 is activated. Similarly, in addition to the MO 4, there are other MOs corresponding to the CC 2. MG status information corresponding to a deactivated CC 2 is activated. It may be understood that, if the MO corresponding to the CC 2 is only the MO 4, the MG status information corresponding to the deactivated CC 2 is deactivated.

It should be understood that, generally, four BWPs configured in one CC are four BWPs with different sizes, and are not four BWPs that are obtained through equal division in FIG. 2. FIG. 2 merely shows an example in which four BWPs are configured in one CC.

S303. The network device sends the second information to the terminal device. Correspondingly, the terminal device receives the second information from the network device.

S304. In a case that M CCs in the at least one CC are deactivated, the terminal device activates or deactivates the MG based on M pieces of MG status information corresponding to the M deactivated CCs. M is a positive integer.

In an implementation, the terminal device activates or deactivates the MG based on the MG status information corresponding to the M deactivated CCs in the second information and MG status information corresponding to current N active BWPs in N CCs. N is a positive integer, and the N CCs are all CCs in L CCs except the M CCs. Specifically, when the MG status information corresponding to the M deactivated CCs is all deactivated, and the MG status information corresponding to the current N active BWPs in the N activated CCs is all deactivated, the terminal device deactivates the MG; otherwise, the terminal device activates the MG.

It should be understood that the network device may configure a plurality of BWPs for the terminal device in each CC. However, in actual application, only one BWP can be activated at a time for one CC.

For example, before the terminal device activates or deactivates the MG, the method further includes: The network device sends third information to the terminal device. The third information indicates MG status information corresponding to each BWP in the L CCs when the BWP is an active BWP. Correspondingly, the terminal device receives the third information sent by the network device. The terminal device determines, based on the third information, the MG status information corresponding to the current N active BWPs in the N CCs. For example, FIG. 2 is used as an example. For the configuration in FIG. 2, refer to the foregoing descriptions. Details are not described herein again. In this case, the third information indicates MG #1 status information corresponding to each BWP in the CC 1 and the CC 2 when the BWP is an active BWP. For a specific correspondence, refer to the descriptions in Table 1. Details are not described herein again.

It should be noted that, because some CCs in the L CCs may overlap with each other in frequency domain, some MOs in the CMOs configured by the network device for the terminal device may fall in an overlapping area of these CCs. In this case, the network device needs to further determine CCs corresponding to these MOs. For example, if CC 1-BWP 3 and CC 2-BWP 2 in FIG. 2 partially overlap, and frequency domain locations of the MO 4 and the MO 5 just belong to an overlapping part, the MO 4 and the MO 5 correspond to both the CC 1 and the CC 2. In this case, the network device can enable each MO in overlapping CCs to correspond only to one CC, so that the network device further determines, based on a corresponding status of the MO, MG status information corresponding to a deactivated CC or an active BWP in a CC. For example, it is assumed that the MO 4 is a serving cell MO corresponding to the CC 2, the network device may enable the MO 4 to correspond to the CC 2. In addition, because most MOs in the CC 1 may be covered by CC 1-BWP 1, the network device may enable the unique MO 5 that cannot be covered by CC 1-BWP 1 in the CC1 to correspond to the CC 2. For another example, according to a random allocation principle, the network device may alternatively enable the MO 4 and the MO 5 to correspond to either of the CC 1 and the CC 2. This is not specifically limited in this application.

The following describes how to determine, by using the foregoing method, to activate or deactivate the preconfigured MG in detail by using an example. The CA scenario shown in FIG. 2 is still used as an example. The second information indicates that the MG #1 status information corresponding to the deactivated CC 2 is activated, and content indicated by the third information is shown in Table 1. In this case, when the CC 2 is a deactivated CC, and an active BWP in the CC 1 is CC 1-BWP 1, because the MG #1 status information corresponding to the deactivated CC 2 is activated, and the MG #1 status information corresponding to CC 1-BWP 1 in Table 1 when CC 1-BWP 1 is an active BWP is deactivated. Therefore, in this scenario, the terminal device needs to activate an MG #1.

It should be understood that a sequence of sending the first information, the second information, and the third information in this embodiment is not limited. The first information, the second information, and the third information may be carried in a plurality of messages, or may be carried in a same message.

It may be understood that, in the foregoing solution, the preconfigured MG is for all MOs configured by the network device for the terminal device. Currently, there is another MG configuration mode (Concurrent MG). The MG preconfigured by the network device may be for one or more MOs in all the MOs. For example, the MG #1 configured by the network device is only for the MO 1 and the MO 5 shown in FIG. 2. When a CC is deactivated, and MG #1 status information corresponding to the deactivated CC needs to be determined, only the MO 1 and the MO 5 corresponding to the MG #1 need to be considered. For example, MOs corresponding to the CC 1 are the MO 1, the MO 2, and the MO 3. However, the MG #1 is only for the MO 1, and the MO 1 is a serving cell MO. Therefore, even if the MO 2 and the MO 3 still exist in a deactivated CC 1, MG #1 status information corresponding to the deactivated CC 1 is also deactivated. Similarly, MOs corresponding to the CC 2 are the MO 4 and the MO 5. However, the MG #1 is only for the MO 5. Therefore, MG #1 status information corresponding to the deactivated CC 2 is activated. For a method for determining, by the terminal device, to activate or deactivate an MG in a scenario in which one or more CCs are deactivated, refer to the descriptions of S303. Details are not described herein again.

It can be learned that, in a scenario in which a CC is deactivated, if the terminal device determines, by considering only MG status information of an active BWP in all activated CCs in a CA combination, whether to activate a preconfigured MG, and does not consider MG status information of a deactivated CC, MOs corresponding to the deactivated CC may be ignored. As a result, the terminal device cannot measure these MOs. However, in the technical solution provided in this application, the network device considers, by indicating the MG status information corresponding to the deactivated CC to the terminal device, whether to activate an MG for the MOs corresponding to the deactivated CC. This can avoid a problem that a cell handover error is caused because the MO corresponding to the deactivated CC cannot be measured.

FIG. 4 is a schematic flowchart of another communication method according to this application. The method may be performed by a terminal device and a network device, or may be performed by a chip in the terminal device and a chip in the network device. The network device in FIG. 4 may be the access network device 110 in FIG. 1, and the terminal device may be the terminal device 120 in FIG. 1. The method shown in FIG. 4 may include the following operations.

S401. The network device determines second information.

In an implementation, the second information indicates S MOs corresponding to each CC in P CCs in L CCs. S is 0 or S is a positive integer. When S is the positive integer, the S MOs are a part or all of one or more MOs that need to be measured by the terminal device, the L CCs are all CCs in a CA combination of the terminal device, and L is an integer greater than 1.

In another implementation, the second information indicates Q MOs corresponding to each BWP in P CCs in L CCs. Q is 0 or Q is a positive integer. When Q is the positive integer, the Q MOs are a part or all of one or more MOs that need to be measured by the terminal device, the L CCs are all CCs in a CA combination of the terminal device, and L is an integer greater than 1.

It should be understood that a prerequisite for determining the second information by the network device is that the network device preconfigures a same MG for the one or more MOs that need to be measured by the terminal device. For example, the preconfigured MG may include a gap mode and gapOffset.

The method further includes: The network device sends first configuration information and first information to the terminal device. The first configuration information is for configuring, for the terminal device, the one or more MOs that need to be measured, and the first information includes a preconfigured MG for the terminal device. The MG is preconfigured for that the terminal device needs to measure the one or more MOs. Correspondingly, the terminal device receives the first configuration information and the first information.

For ease of description, an example in which the one or more MOs that need to be measured by the terminal device are CMOs is used below for description. C is a positive integer.

In a first implementation of the second information, when P is equal to L, the second information indicates a correspondence between each CC in the L CCs and the CMOs, which may alternatively be described as that the second information indicates a correspondence between each CC in all CCs of the terminal device and the C MOs; or when P is less than L, the second information indicates a correspondence between each CC in a part of CCs in the L CCs and the C MOs.

In a second implementation of the second information, when P is equal to L, the second information indicates a correspondence between each BWP in each CC in the L CCs and the C MOs, which may alternatively be described as that the second information indicates a correspondence between each BWP in each CC in all the CCs of the terminal device and the C MOs; or when P is less than L, the second information indicates a correspondence between each BWP in each CC in a part of the L CCs and the CMOs.

The following uses an example to describe how to determine the second information in the first implementation with reference to a specific scenario. FIG. 2 is used as an example. The preconfigured MG #1 is for the MO 1 to the MO 5. When P=L=2, the second information indicates that the CC 1 corresponds to the MO 1, the MO 2, and the MO 3, and the CC 2 corresponds to the MO 4 and the MO 5; and when P is less than L, for example, L=2 and P=1, the second indication may indicate that the CC 2 corresponds to the MO 4 and the MO 5, or the second indication may indicate that the CC 1 corresponds to the MO 1, the MO 2, and the MO 3.

The following uses an example to describe how to determine the second information in the second implementation with reference to a specific scenario. FIG. 2 is used as an example. The preconfigured MG #1 is for the MO 1 to the MO 5. When P=L=2, the second information indicates that CC 1-BWP 1 corresponds to the MO 1, the MO 2, and the MO 3, CC 1-BWP 2, CC 1-BWP 3, and CC 1-BWP 4 all correspond to 0 MOs, CC 2-BWP 1, CC 2-BWP 3, and CC 2-BWP 4 all correspond to 0 MOs, and CC 2-BWP 2 corresponds to the MO 4 and the MO 5.

S402. The network device sends the second information to the terminal device. Correspondingly, the terminal device receives the second information from the network device.

S403. In a case that M CCs in the L CCs are deactivated, the terminal device activates or deactivates an MG based on the second information. M is a positive integer less than L.

It should be understood that when P is less than L, MOs corresponding to the P CCs indicated by the second information may not include the configured C MOs. Therefore, a range of activated or deactivated CCs needs to have a limitation. The limitation is: N activated CCs in the L CCs are a part or all of CCs in the P CCs. The N CCs are CCs other than the M CCs in the L CCs. For specific reasons, refer to the following explanations. Details are not described herein.

In a specific implementation, that the terminal device activates or deactivates an MG based on the second information may include the following steps.
1. The terminal device determines a first MO group based on the second information. The first MO group includes an MO that corresponds to each BWP whose MG status information is deactivated in current active BWPs in the N activated CCs.
   It should be noted that, if MG status information corresponding to a BWP in one CC is deactivated, it indicates that all MOs that correspond to the CC and that are indicated in the second information are covered by the BWP. A specific reason is as follows: If a plurality of BWPs in one CC all cover an MO, no matter which BWP in the CC is activated, on an inactive BWP in the CC, there is still an MO that needs GAP measurement. Therefore, no matter which BWP in the CC is activated, MG status information corresponding to the active BWP is activated. Only when all MOs corresponding to the CC are covered by a same BWP, MG status information corresponding to the BWP when the BWP is an active BWP is deactivated.
2. The terminal device determines a second MO group. The second MO group includes an MO in CMOs except a first MO respectively corresponding to each of the M deactivated CCs. A first MO corresponding to the first CC is a serving cell MO corresponding to the first CC, and the first CC is any CC in the M CCs.
   It should be understood that a sequence of steps 1 and 2 is not specifically limited.
3. When the MOs included in the first MO group and the MOs included in the second MO group are the same, the terminal device determines to deactivate the MG. When the MOs included in the first MO group and the MOs included in the second MO group are different, the terminal device activates the MG.

To be specific, when determining to deactivate the MG, the terminal device needs to determine whether all MOs in the first MO group are MOs that are covered by the active BWP whose MG status information is deactivated in the N activated CCs. If yes, it indicates that no MO needs to be measured by using the preconfigured MG. In this way, the terminal device may deactivate the MG. If not, the terminal device needs to activate the MG.

This section describes the specific reason why the range of the activated or deactivated CCs is limited. It can be learned from the foregoing that, when whether to activate the MG is determined, the determining needs to be performed based on the MOs included in the first MO group and the second MO group. When the second MO group is determined, a serving cell MO corresponding to the M deactivated CCs and the C MOs are all known to the terminal device. Therefore, the second MO group does not need to be determined based on the second information. However, when the first MO group is determined, the MO that corresponds to each BWP whose MG status information is deactivated in the current active BWP in the N activate CCs needs to be known. Therefore, the second MO group needs to be determined based on the second information. In other words, the N activated CCs in step 1 need to be a part or all of the P CCs configured in the second information. If a CC 1 included in the N activated CCs is a CC other than the P CCs configured by the second information, because no MO corresponding to the CC 1 is configured in the second information, the terminal device may fail to determine, when determining the first MO group, an MO that corresponds to an active BWP whose MG status information is deactivated in the CC 1. As a result, a determined MO set included in the first MO group may be incorrect, and the preconfigured MG may be unnecessarily activated.

For example, a BWP whose MG status information in the active BWP of the N activated CCs is deactivated may be determined based on third information sent by the network device to the terminal device. The third information indicates MG status information corresponding to each BWP in the L CCs when the BWP is an active BWP. Correspondingly, the terminal device receives the third information sent by the network device. The terminal device determines, based on the third information, the MG status information corresponding to the current active BWP in the N CCs.

The following describes how to determine, by using the foregoing method, to activate or deactivate the preconfigured MG in detail by using an example. FIG. 2 is still used as an example. L=P=2, the preconfigured MG #1 is for the MO 1 to the MO 5, the MO 1 is a serving cell MO corresponding to the CC 1, the MO 4 is a serving cell MO corresponding to the CC 2, the second information indicates that MOs corresponding to the CC 1 are the MO 1, the MO 2, and the MO 3, and MOs corresponding to the CC 2 are the MO 4 and the MO 5, and the third information indicates MG #1 status information corresponding to each BWP in the CC 1 and the CC 2 when the BWP is an active BWP. For a specific correspondence, refer to the descriptions in Table 1. Details are not described herein again. In this case, after the CC 2 is deactivated, a current active BWP in the CC 1 is BWP 1, and MG status information corresponding to BWP 1 is deactivated. It is determined that the first MO group includes the MO 1, the MO 2, and the MO 3, and the second MO group includes the MO 1, the MO 2, the MO 3, and the MO 5. Because the MOs included in the first MO group are not equal to those included in the second MO group, the terminal device needs to activate the preconfigured MG #1. It may be understood that, because the MO 4 is the serving cell MO corresponding to the CC 2, the terminal device only needs to consider whether all remaining MO 1, MO 2, MO 3, and MO 5 other than the MO 4 are covered by a CC 1-BWP. Because the MO 5 is not covered by the CC 1-BWP, the terminal device needs to activate the preconfigured MG #1.

It may be understood that, in the foregoing solution, the preconfigured MG is for all MOs (that is, the C MOs) configured by the network device for the terminal device. Currently, there is another MG configuration mode (Concurrent MG). The MG preconfigured by the network device may be for one or more MOs in all the MOs. That the MG #1 configured by the network device is for only the MO 1 and the MO 5 shown in FIG. 2 is used as an example. In this embodiment, only the MO 1 and the MO 5 that are corresponding to the MG #1 need to be considered for configuration of the second information and determining of the MOs in the first MO group and the second MO group. For a specific determining process of determining whether to activate the MG #1 in the scenario in which the CC is deactivated, refer to the descriptions in S404. Details are not described herein again.

In the foregoing technical solution, the network device configures, for the terminal device, a correspondence between a CC and an MO or a correspondence between a BWP in a CC and an MO. When a CC is deactivated, the terminal device may consider deactivating an MO corresponding to the CC, to avoid a problem that a cell handover error is caused because the MO corresponding to the deactivated CC cannot be measured. In addition, in comparison with the embodiment corresponding to FIG. 3, the network device indicates only the correspondence between a CC or a BWP and an MO, and does not directly indicate, to the terminal device, MG status information of a deactivated CC. This reduces excessive determining logic introduced into the network side, so that energy consumption of the network device is reduced, and calculation complexity, a delay, or an error probability is reduced.

In addition to the foregoing two communication methods, this application further provides another communication method to avoid a problem that in a scenario in which a CC is deactivated, a cell handover error is caused because an MO corresponding to the deactivated CC cannot be measured. The method may be performed by a terminal device and a network device, or may be performed by a chip in the terminal device and a chip in the network device. In the method, the network device may be the access network device 110 in FIG. 1, and the terminal device may be the terminal device 120 in FIG. 1. The method may include the following operations.

S501. The network device sends first information to the terminal device, and the first information includes a preconfigured MG for the terminal device. Correspondingly, the terminal device receives the first information from the network device.

The preconfigured MG may include a gap mode and gapOffset.

For example, the method further includes: The network device sends first configuration information to the terminal device. The first configuration information is for configuring C MOs for the terminal device, C is a positive integer, and the preconfigured MG is configured for the C MOs. Correspondingly, the terminal device receives the first configuration information.

S502. The network device sends second information to the terminal device. The second information indicates whether the terminal device needs to activate the preconfigured MG in a scenario in which any M CCs in L CCs are deactivated and different BWPs are activated in remaining N CCs in the L CCs except the M CCs. The L CCs are all CCs in a CA combination of the terminal device, L is an integer greater than 1, and M is a positive integer. Correspondingly, the terminal device receives the second information from the network device.

Simply speaking, the network device enumerates, based on the second information, a result of determining whether the terminal device needs to activate the preconfigured MG in a scenario in which any one or more CCs in the CA combination of the terminal device are deactivated. In this way, the terminal device only needs to know a current deactivated CC and a current active BWP, and can quickly determine, based on the second information, whether to activate the MG, so that determining time of the terminal device is reduced and introducing excessive determining logic on a terminal device side is avoided.

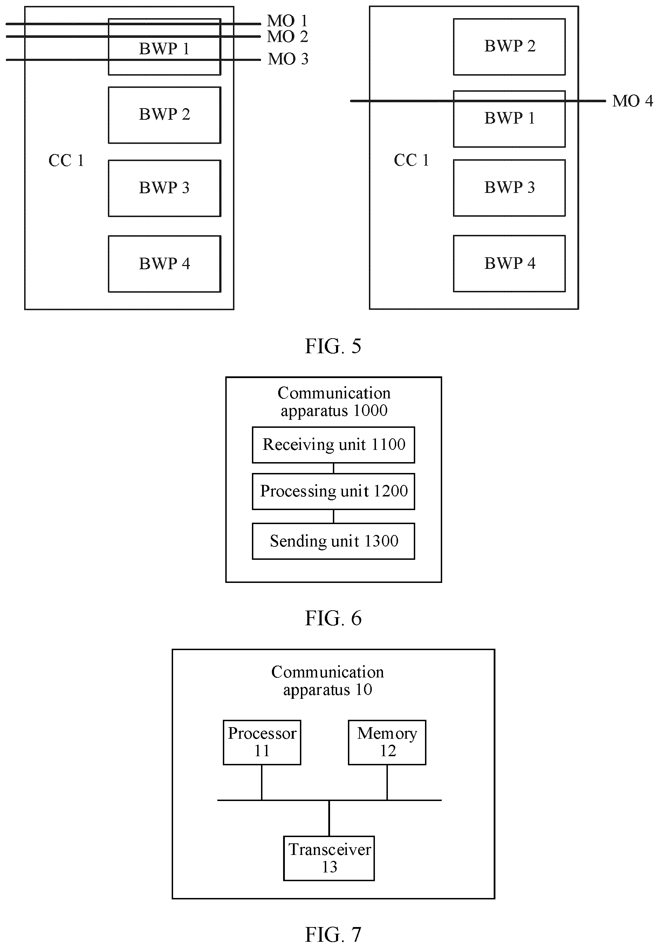

The following uses a CA scenario shown in FIG. 5 as an example to describe content indicated by the second information. In the CA scenario shown in FIG. 5, a preconfigured MG #1 is configured for an MO 1 to an MO 4, the MO 1, an MO 2, and an MO 3 are covered by CC 1-BWP 1, the MO 4 is covered by CC 2-BWP 2, the MO 1 is a serving cell MO corresponding to the CC 1, and the MO 4 is a serving cell MO corresponding to the CC 2. It can be learned that MG #1 status information corresponding to the deactivated CC 1 is activated after the CC 1 is deactivated, MG #1 status information corresponding to the deactivated CC 2 is deactivated after the CC 2 is deactivated, and specific MG #1 status information corresponding to each BWP in the CC 1 and the CC 2 when the BWP is an active BWP is shown in Table 2.

**Table 2**

| Active BWP in CC 1 | MG #1 status information | Active BWP in CC 2 | MG #1 status information |
|---|---|---|---|
| BWP 1 | Deactivated | BWP 1 | Activated |
| BWP 2 | Activated | BWP 2 | Deactivated |
| BWP 3 | Activated | BWP 3 | Activated |
| BWP 4 | Activated | BWP 4 | Activated |

With reference to Table 1 and the MG #1 status information corresponding to the deactivated CC 1 and the deactivated CC 2 after the CC 1 and the CC 2 are deactivated, content (that is, an example of the second information) in Table 3 may be determined. It can be learned that the terminal device only needs to know the current deactivated CC and the current active BWP, and may directly determine, by querying Table 3, whether to activate the MG #1. For example, in a scenario in which the CC 2 is deactivated and CC 1-BWP 1 in the CC 1 is an active BWP, it can be learned, by querying content in the 2^{nd} column in the last row in Table 3, that the terminal device needs to deactivate the MG #1. For another example, when the CC 2 is deactivated, and CC 1-BWP 3 in the CC 1 is an active BWP, it can be learned, by querying the 4^{th} column in the last row in Table 3, that the terminal device needs to activate the MG #1.

**Table 3**

| BWP combination | CC 1-BWP 1 | CC 1-BWP 2 | CC 1-BWP 3 | CC 1-BWP 4 | CC 1 deactivated |
|---|---|---|---|---|---|
| CC 2-BWP 1 | / | / | / | / | Activate the MG #1. |
| CC 2-BWP 2 | / | / | / | / | Activate the MG #1. |
| CC 2-BWP 3 | / | / | / | / | Activate the MG #1. |
| CC 2-BWP 4 | / | / | / | / | Activate the MG #1. |
| CC 2 deactivated | Deactivate the MG #1. | Activate the MG #1. | Activate the MG #1. | Activate the MG #1. | Activate the MG #1. |

For example, when both the CC 1 and the CC 2 are activated CCs, the network device may further enumerate MG #1 status information corresponding to different active BWP combinations in the CC 1 and the CC 2, and indicate the enumerated MG #1 status information to the terminal device. For example, content indicated by the indication information is shown in Table 4.

**Table 4**

| BWP combination | CC 1-BWP 1 | CC 1-BWP 2 | CC 1-BWP 3 | CC 1-BWP 4 |
|---|---|---|---|---|
| CC 2-BWP 1 | Activate the MG #1. | Activate the MG #1. | Activate the MG #1. | Activate the MG #1. |
| CC 2-BWP 2 | Deactivate the MG #1. | Activate the MG #1. | Activate the MG #1. | Activate the MG #1. |
| CC 2-BWP 3 | Activate the MG #1. | Activate the MG #1. | Activate the MG #1. | Activate the MG #1. |
| CC 2-BWP 4 | Activate the MG #1. | Activate the MG #1. | Activate the MG #1. | Activate the MG #1. |

For example, Table 3 and Table 4 may alternatively be combined into Table 5.

**Table 5**

| BWP combination | CC 1-BWP 1 | CC 1-BWP 2 | CC 1-BWP 3 | CC 1-BWP 4 | CC 1 deactivated |
|---|---|---|---|---|---|
| CC 2-BWP 1 | Activate the MG #1. | Activate the MG #1. | Activate the MG #1. | Activate the MG #1. | Activate the MG #1. |
| CC 2-BWP 2 | Deactivate the MG #1. | Activate the MG #1. | Activate the MG #1. | Activate the MG #1. | Activate the MG #1. |
| CC 2-BWP 3 | Activate the MG #1. | Activate the MG #1. | Activate the MG #1. | Activate the MG #1. | Activate the MG #1. |
| CC 2-BWP 4 | Activate the MG #1. | Activate the MG #1. | Activate the MG #1. | Activate the MG #1. | Activate the MG #1. |
| CC 2 deactivated | Deactivate the MG #1. | Activate the MG #1. | Activate the MG #1. | Activate the MG #1. | Activate the MG #1. |

For example, in S501, the second information may also indicate the MG #1 status information corresponding to the deactivated CC 1 and the deactivated CC 2 after the CC 1 and the CC 2 are deactivated, and content in Table 4. When a row or column of the active BWP of the activated CC in Table 4 includes "deactivate" and MG status information corresponding to the deactivated CC is deactivated, the terminal device deactivates the MG #1; otherwise, the terminal device activates the MG #1. For example, the network device indicates that the MG #1 status information corresponding to the deactivated CC 2 is deactivated. In this way, in a scenario in which the CC 2 is deactivated and CC 1-BWP 1 in the CC 1 is an active BWP, because a column corresponding to CC 1-BWP 1 in Table 4 includes "deactivate the MG #1" and the MG #1 status information corresponding to the deactivated CC 2 is also deactivated, the terminal device deactivates the MG #1.

For example, to reduce overheads, when indicating Table 1 to Table 5, the network device may only indicate a BWP combination corresponding to that the MG #1 status information is deactivated. For example, Table 5 may be simplified into Table 6.

**Table 6**

| BWP combination | CC 1-BWP 1 | CC 1-BWP 2 | CC 1-BWP 3 | CC 1-BWP 4 | CC 1 deactivated |
|---|---|---|---|---|---|
| CC 2-BWP 1 | / | / | / | / | / |
| CC 2-BWP 2 | Deactivate the MG #1. | / | / | / | / |
| CC 2-BWP 3 | / | / | / | / | / |
| CC 2-BWP 4 | / | / | / | / | / |
| CC 2 deactivated | Deactivate the MG #1. | / | / | / | / |

S503. When the M CCs of the L CCs are deactivated, the terminal device determines, based on the second information, to activate or deactivate the MG.

The foregoing describes in detail the communication method provided in this application. The following describes communication apparatuses provided in this application.

FIG. 6 is a schematic block diagram of a communication apparatus 1000 according to this application.

In a possible design, the communication apparatus 1000 includes a receiving unit 1100 and a processing unit 1200. The communication apparatus 1000 may implement a step or procedure performed by the terminal device in the foregoing method embodiments. For example, the communication apparatus 1000 may be a terminal device, or may be a chip or a circuit disposed in a terminal device. The receiving unit 1100 is configured to perform a receiving-related operation of the terminal device in the foregoing method embodiments, and the processing unit 1200 is configured to perform a processing-related operation of the terminal device in the foregoing method embodiments.

In a possible implementation, the receiving unit 1100 is configured to receive first information. The first information includes a preconfigured MG for the terminal device. The receiving unit 1100 is further configured to receive second information. The second information indicates MG status information corresponding to each CC in at least one CC after the CC is deactivated, and the MG status information is activated or deactivated. The processing unit 1200 is configured to: in a case that M CCs in the at least one CC are deactivated, activate or deactivate the MG based on M pieces of MG status information corresponding to the M deactivated CCs. M is a positive integer.

For example, the processing unit 1200 is specifically configured to: activate or deactivate the MG based on the M pieces of MG status information corresponding to the M deactivated CCs and N pieces of MG status information corresponding to active bandwidth parts BWPs in N CCs, where N is a positive integer, and the M CCs and the N CCs are all CCs in a carrier aggregation CA combination of the terminal device.

For example, the receiving unit 1100 is further configured to receive third information. The third information indicates MG status information respectively corresponding to each BWP in all the CCs when the BWP is an active BWP. The processing unit 1200 is further configured to determine, based on the third information, the N pieces of MG status information corresponding to the active BWPs in the N CCs.

For example, the processing unit 1200 is specifically configured to: in a case that the M pieces of MG status information corresponding to the M deactivated CCs are all deactivated, and the N pieces of MG status information corresponding to the active BWPs in the N CCs are all deactivated, deactivate the MG.

In another possible implementation, the receiving unit 1100 is configured to receive second information. The second information indicates S measurement objects MOs corresponding to each CC in P CCs in L component carriers CCs. S is 0 or S is a positive integer, the S MOs are a part or all of one or more MOs that need to be measured by the terminal device, the L CCs are all CCs in a carrier aggregation CA combination of the terminal device, and L is an integer greater than 1. Alternatively, the second information indicates Q MOs corresponding to each BWP in P CCs in L CCs. Q is 0 or Q is a positive integer, and the Q MOs are a part or all of one or more MOs. The processing unit 1200 is configured to: in a case that M CCs in the L CCs are deactivated, activate or deactivate a measurement gap MG based on the second information. M is a positive integer less than L, and the N activated CCs in the L CCs are a part or all of CCs in the P CCs.

For example, the receiving unit 1100 is further configured to receive first configuration information. The first configuration information is for configuring the one or more MOs for the terminal device.

For example, the receiving unit 1100 is further configured to receive first information. The first information includes a measurement gap MG configured for the terminal device.

For example, the processing unit 1200 is specifically configured to: determine a first MO group based on the second information, where the first MO group includes MOs that correspond to BWPs whose corresponding MG status information is deactivated in active BWPs in N CCs, the N CCs are a part or all of activated CCs in the P CCs, and N is a positive integer; determine a second MO group, where the second MO group includes an MO other than a first MO corresponding to each CC in M CCs in the one or more MOs, where a first MO corresponding to a first CC is a serving cell MO corresponding to the first CC, and the first CC is any CC in the M CCs; and deactivate the MG in a case that the MOs included in the first MO group and the MOs included in the second MO group are the same.

For example, the receiving unit 1100 is further configured to receive third information. The third information indicates MG status information corresponding to each bandwidth part BWP in the L CCs when the bandwidth part BWP is an active BWP, and the MG status information is activated or deactivated. The processing unit 1200 is further configured to determine, based on the third information, a BWP whose corresponding MG status information is deactivated in N active BWPs in the N CCs.

For example, the communication apparatus 1000 further includes a sending unit 1300. The sending unit 1300 and the receiving unit 1100 may alternatively be integrated into a transceiver unit, and have both receiving and sending functions. This is not limited herein.

For example, in an implementation in which the communication apparatus 1000 is the terminal device in the method embodiments, the sending unit 1300 may be a transmitter, and the receiving unit 1100 may be a receiver. Alternatively, the receiver and the transmitter may be integrated into a transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, to enable the communication apparatus 1000 to perform an operation and/or processing performed by the terminal device in the method embodiments. For example, the processing apparatus may include only a processor, and a memory configured to store a computer program is located outside the processing apparatus. The processor is connected to the memory via a circuit/wire, to read and execute the computer program stored in the memory. For another example, the processing apparatus may be a chip or an integrated circuit.

For example, in an implementation in which the communication apparatus 1000 is a chip or an integrated circuit installed in the terminal device, the sending unit 1300 and the receiving unit 1100 may each be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

In another possible design, the communication apparatus 1000 includes the processing unit 1200 and the sending unit 1300. The communication apparatus 1000 may implement a step or procedure performed by the network device in the foregoing method embodiments. For example, the communication apparatus 1000 may be a network device, or may be a chip or a circuit disposed in a network device. The sending unit 1300 is configured to perform a receiving-related operation of the network device in the foregoing method embodiments. The processing unit 1200 is configured to perform a processing-related operation of the network device in the foregoing method embodiments.

In a possible implementation, the sending unit 1300 is configured to send first information to the terminal device. The first information includes a preconfigured measurement gap MG for the terminal device. The processing unit 1200 is configured to determine second information. The second information indicates MG status information corresponding to each CC in at least one CC after the CC is deactivated, and the MG status information is activated or deactivated. The sending unit 1300 is further configured to send the second information to the terminal device.

For example, the sending unit 1300 is further configured to send third information to the terminal device. The third information indicates MG status information respectively corresponding to each bandwidth part BWP in all CCs when each BWP is an active BWP.

For example, the processing unit 1200 is specifically configured to: when a first CC covers only a first MO, determine the second information, where the second information indicates that MG status information corresponding to the first CC after the first CC is deactivated is deactivated, the first MO is a serving cell MO corresponding to the first CC, and the first CC is any CC in the at least one CC; or when a first CC does not cover any MO, determine the second information, where the second information indicates that MG status information corresponding to the first CC after the first CC is deactivated is deactivated.

In another possible implementation, the processing unit 1200 is configured to determine the second information. The second information indicates S measurement objects MOs corresponding to each CC in P CCs in L component carriers CCs. S is 0 or S is a positive integer, the S MOs are a part or all of one or more MOs that need to be measured by the terminal device, the L CCs are all CCs in a carrier aggregation CA combination of the terminal device, and L is an integer greater than 1. Alternatively, the second information indicates Q MOs corresponding to each BWP in P CCs in L CCs. Q is 0 or Q is a positive integer, and the Q MOs are a part or all of one or more MOs. The sending unit 1300 is configured to send the second information to the terminal device, so that the terminal device activates or deactivates a measurement gap MG based on the second information. The MG is preconfigured for the one or more MOs.

For example, the sending unit 1300 is further configured to send first information to the terminal device. The first information includes a measurement gap MG configured for the terminal device.

For example, the sending unit 1300 is further configured to send first configuration information to the terminal device. The first configuration information is for configuring the one or more MOs for the terminal device.

For example, the sending unit 1300 is further configured to send third information to the terminal device. The third information indicates MG status information corresponding to each bandwidth part BWP in the L CCs when the BWP is an active BWP. The MG status information is activated or deactivated.

For example, the communication apparatus 1000 further includes a receiving unit 1100. The sending unit 1300 and the receiving unit 1100 may alternatively be integrated into a transceiver unit, and have both receiving and sending functions. This is not limited herein.

For example, in an implementation in which the communication apparatus 1000 is the network device in the method embodiments, the sending unit 1300 may be a transmitter, and the receiving unit 1100 may be a receiver. Alternatively, the receiver and the transmitter may be integrated into a transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, to enable the communication apparatus 1000 to perform an operation and/or processing performed by the network device in the method embodiments. For example, the processing apparatus may include only the processor, and the memory configured to store a computer program is located outside the processing apparatus. The processor is connected to the memory via a circuit/wire, to read and execute the computer program stored in the memory. For another example, the processing apparatus may be a chip or an integrated circuit.

For example, in the implementation in which the communication apparatus 1000 is the chip or the integrated circuit installed in the network device, the sending unit 1300 and the receiving unit 1100 may each be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

FIG. 7 is a schematic diagram of a structure of a communication apparatus 10 according to this application. The apparatus 10 includes a processor 11. The processor 11 is coupled to a memory 12. The memory 12 is configured to store a computer program or instructions and/or data. The processor 11 is configured to execute the computer program or the instructions stored in the memory 12, or read the data stored in the memory 12, to perform the method in the foregoing method embodiments.

For example, there are one or more processors 11.

For example, there are one or more memories 12.

For example, the memory 12 and the processor 11 are integrated together, or are disposed separately.

For example, as shown in FIG. 7, the apparatus 10 further includes a transceiver 13, and the transceiver 13 is configured to receive and/or send a signal. For example, the processor 11 is configured to control the transceiver 13 to receive and/or send the signal.

In a solution, the apparatus 10 is configured to implement an operation performed by the terminal device in the foregoing method embodiments.

For example, the processor 11 is configured to execute the computer program or the instructions stored in the memory 12, to implement a related operation performed by the terminal device in the foregoing method embodiments. For example, the method performed by the terminal device in the embodiment shown in FIG. 3 or FIG. 4 is implemented.

In another solution, the apparatus 10 is configured to implement an operation performed by the network device in the foregoing method embodiments.

For example, the processor 11 is configured to execute the computer program or the instructions stored in the memory 12, to implement a related operation performed by the network device in the foregoing method embodiments. For example, the method performed by the network device in the embodiment shown in FIG. 3 or FIG. 4 is implemented.

In addition, this application further provides a computer-readable storage medium. The computer-readable storage medium stores computer instructions. When the computer instructions are run on a computer, an operation and/or a procedure performed by the terminal device or the network device in the method embodiments of this application are/is performed.

This application further provides a computer program product. The computer program product includes computer program code or instructions. When the computer program code or the instructions are run on a computer, an operation and/or a procedure performed by the terminal device or the network device in the method embodiments of this application are/is performed.

In addition, this application further provides a chip. The chip includes a processor. A memory configured to store a computer program is disposed independently of the chip, and the processor is configured to execute the computer program stored in the memory, so that an operation and/or processing performed by the terminal device or the network device in any method embodiment are/is performed.

Further, the chip may further include a communication interface. The communication interface may be an input/output interface, an interface circuit, or the like. Further, the chip may further include the memory.

In addition, this application further provides a communication system, including the terminal device and the network device in embodiments of this application.

It should be understood that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or the units may be implemented in an electrical, a mechanical, or another form. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each unit may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" mentioned in embodiments of this application are used to distinguish between a plurality of objects, and are not used to limit sizes, content, a sequence, a time sequence, priorities, importance, or the like of the plurality of objects. For example, first information and second information do not indicate different information amounts, content, priorities, importance, or the like.

It should be further understood that, in this application, "at least one" means one or more, and "a plurality of" means two or more. "At least one (one piece)" or a similar expression thereof refers to one item (piece) or more items (pieces), that is, any combination of these items, including any combination of a single items (pieces) or a plurality of items (pieces). For example, at least one of a, b, or c represents: a, b, c, a and b, a and c, b and c, or a and b and c.

It should be further understood that, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B.

It should be further understood that, in embodiments of this application, "B corresponding to A" represents that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information, wherein the first information comprises a preconfigured measurement gap MG for a terminal device;
receiving second information, wherein the second information indicates MG status information corresponding to each CC in at least one CC after the CC is deactivated, and the MG status information is activated or deactivated; and
in a case that M CCs in the at least one CC are deactivated, activating or deactivating the MG based on M pieces of MG status information corresponding to the M deactivated CCs, wherein M is a positive integer.

2. The method according to claim 1, wherein the activating or deactivating the MG based on M pieces of MG status information corresponding to the M deactivated CCs comprises:
activating or deactivating the MG based on the M pieces of MG status information corresponding to the M deactivated CCs and N pieces of MG status information corresponding to active bandwidth parts BWPs in N CCs, wherein N is a positive integer, and the M CCs and the N CCs are all CCs in a carrier aggregation CA combination of the terminal device.

3. The method according to claim 2, wherein the method further comprises:
receiving third information from a network device, wherein the third information indicates MG status information respectively corresponding to each BWP in all the CCs when the BWP is an active BWP; and
determining, based on the third information, the N pieces of MG status information corresponding to the active BWPs in the N CCs.

4. The method according to claim 3, wherein the activating or deactivating the MG based on the M pieces of MG status information corresponding to the M deactivated CCs and N pieces of MG status information corresponding to active bandwidth parts BWPs in N CCs comprises:
in a case that the M pieces of MG status information corresponding to the M deactivated CCs are all deactivated, and the N pieces of MG status information corresponding to the active BWPs in the N CCs are all deactivated, deactivating the MG.

5. The method according to any one of claims 1 to 4, wherein
when a first CC covers only a first MO, the second information indicates that MG status information corresponding to the first CC after the first CC is deactivated is deactivated, the first MO is a serving cell MO corresponding to the first CC, and the first CC is any CC in the at least one CC; or
when a first CC does not cover any MO, the second information indicates that MG status information corresponding to the first CC after the first CC is deactivated is deactivated.

6. A communication method, comprising:
sending first information to a terminal device, wherein the first information comprises a preconfigured measurement gap MG for the terminal device;
determining second information, wherein the second information indicates MG status information corresponding to each CC in at least one CC after the CC is deactivated, and the MG status information is activated or deactivated; and
sending the second information to the terminal device.

7. The method according to claim 6, wherein the method further comprises:
sending third information to the terminal device, wherein the third information indicates MG status information respectively corresponding to each bandwidth part BWP in all CCs in a carrier aggregation CA combination of the terminal device when the BWP is an active BWP.

8. The method according to claim 6 or 7, wherein the determining second information, wherein the second information indicates MG status information corresponding to each CC in at least one CC after the CC is deactivated, and the MG status information is activated or deactivated comprises:
when a first CC covers only a first MO, determining the second information, wherein the second information indicates that MG status information corresponding to the first CC after the first CC is deactivated is deactivated, the first MO is a serving cell MO corresponding to the first CC, and the first CC is any CC in the at least one CC; or
when a first CC does not cover any MO, determining the second information, wherein the second information indicates that MG status information corresponding to the first CC after the first CC is deactivated is deactivated.

9. A communication method, comprising:
receiving second information, wherein the second information indicates S measurement objects MOs corresponding to each CC in P CCs in L component carriers CCs, wherein S is 0 or S is a positive integer, the S MOs are a part or all of one or more MOs that need to be measured by a terminal device, the L CCs are all CCs in a carrier aggregation CA combination of the terminal device, and L is an integer greater than 1, or the second information indicates Q MOs corresponding to each BWP in P CCs in L CCs, wherein Q is 0 or Q is a positive integer, and the Q MOs are a part or all of one or more MOs; and
in a case that M CCs in the L CCs are deactivated, activating or deactivating a measurement gap MG based on the second information, wherein M is a positive integer less than L.

10. The method according to claim 9, wherein the method further comprises:
receiving first configuration information, wherein the first configuration information is for configuring the one or more MOs for the terminal device; and
receiving first information, wherein the first information comprises the measurement gap MG configured for the terminal device.

11. The method according to claim 9 or 10, wherein the activating or deactivating an MG based on the second information comprises: determining a first MO group based on the second information, wherein the first MO group comprises all MOs that correspond to BWPs whose corresponding MG status information is deactivated in active BWPs in N CCs, the N CCs are a part or all of activated CCs in the P CCs, and N is a positive integer;
determining a second MO group, wherein the second MO group comprises an MO other than a first MO corresponding to each CC in the M CCs in the one or more MOs, wherein a first MO corresponding to a first CC is a serving cell MO corresponding to the first CC, and the first CC is any CC in the M CCs; and
deactivating the MG in a case that the MOs comprised in the first MO group and the MOs comprised in the second MO group are the same.

12. The method according to any one of claims 9 to 11, wherein the method further comprises:
receiving third information, wherein the third information indicates MG status information corresponding to each bandwidth part BWP in the L CCs when the BWP is an active BWP, and the MG status information is activated or deactivated; and
determining, based on the third information, a BWP whose corresponding MG status information is deactivated in N active BWPs in the N CCs.

13. A communication method, comprising:
determining second information, wherein the second information indicates S measurement objects MOs corresponding to each CC in P CCs in L component carriers CCs, wherein S is 0 or S is a positive integer, the S MOs are a part or all of one or more MOs that need to be measured by a terminal device, the L CCs are all CCs in a carrier aggregation CA combination of the terminal device, and L is an integer greater than 1, or the second information indicates Q MOs corresponding to each BWP in P CCs in L CCs, wherein Q is 0 or Q is a positive integer, and the Q MOs are a part or all of one or more MOs; and
sending the second information to the terminal device.

14. The method according to claim 13, wherein the method further comprises:
sending first information to the terminal device, wherein the first information comprises a measurement gap MG configured for the terminal device; and
sending first configuration information to the terminal device, wherein the first configuration information is for configuring the one or more MOs for the terminal device.

15. The method according to claim 13 or 14, wherein the method further comprises:
sending third information to the terminal device, wherein the third information indicates MG status information corresponding to each bandwidth part BWP in the L CCs when the BWP is an active BWP, and the MG status information is activated or deactivated.

16. A communication apparatus, comprising a module configured to perform the method according to any one of claims 1 to 5, 6 to 8, 9 to 12, or 13 to 15.

17. A communication apparatus, wherein the communication apparatus comprises at least one processor and at least one memory, the at least one memory is configured to store a computer program or instructions, and the at least one processor is configured to execute the computer program or the instructions in the memory, to enable the method according to any one of claims 1 to 5 to be performed, or enable the method according to any one of claims 6 to 8 to be performed, or enable the method according to any one of claims 9 to 12 to be performed, or enable the method according to any one of claims 13 to 15 to be performed.

18. A computer-readable storage medium, wherein the computer-readable storage medium stores computer instructions, and when the computer instructions are run on a computer, the method according to any one of claims 1 to 5 is performed, the method according to any one of claims 6 to 8 is performed, the method according to any one of claims 9 to 12 is performed, or the method according to any one of claims 13 to 15 is performed.

19. A computer program product, wherein the computer program product comprises computer program code, and when the computer program code is run on a computer, the method according to any one of claims 1 to 5 is performed, the method according to any one of claims 6 to 8 is performed, the method according to any one of claims 9 to 12 is performed, or the method according to any one of claims 13 to 15 is performed.
